(19) Europäisches Patentamt / European Patent Office / Office européen des brevets

(11) **EP 4 040 394 A1**

(12) **EUROPEAN PATENT APPLICATION**

(43) Date of publication:
10.08.2022 Bulletin 2022/32

(21) Application number: 21214862.1

(22) Date of filing: 15.12.2021

(51) International Patent Classification (IPC):
*G06T 11/20* (2006.01)    *G06T 3/40* (2006.01)

(52) Cooperative Patent Classification (CPC):
**G06T 11/203; G06T 3/4038;** G06T 2207/30132;
G06T 2207/30168

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.02.2021 JP 2021016677

(71) Applicant: **Ricoh Company, Ltd.**
**Tokyo 143-8555 (JP)**

(72) Inventors:
• **KAGITANI, Kenji**
**Tokyo 143-8555 (JP)**
• **OHTA, Yuusuke**
**Tokyo 143-8555 (JP)**
• **KIKUCHI, Taro**
**Tokyo 143-8555 (JP)**

(74) Representative: **White, Duncan Rohan**
**Marks & Clerk LLP**
**Fletcher House**
**Heatley Road**
**The Oxford Science Park**
**Oxford OX4 4GE (GB)**

(54) **INFORMATION PROCESSING DEVICE, INFORMATION PROCESSING METHOD, AND CARRIER MEANS**

(57)    An information processing device (3), a method of displaying an image, and carrier means. The information processing device (3) and the method include an operation acceptance unit (44) configured to receiving a request to display combined-image data indicating an image (21) in which a plurality of images captured upon dividing a spatially continuous region are combined, and outputting the combined-image data and boundary line information including position information of a boundary line (22) indicating a combined portion of the plurality of images, in response to the request to display the display combined-image data. The carrier means caries computer readable code for controlling a computer to carry out the method.

FIG. 4

INFORMATION PROCESSING DEVICE — 3

31 — IMAGE DATA TRANSMITTER AND RECEIVER

32 — IMAGE CORRECTION UNIT

33 — BOUNDARY DETERMINING UNIT

34 — COMBINED-IMAGE GENERATION UNIT

35 — IMAGE DATA STORAGE UNIT

EP 4 040 394 A1

**Description**

BACKGROUND

Technical Field

Embodiments of the present disclosure relate to an information processing device, an information processing method, and carrier means.

Background Art

In the related art, technologies are known to measure the line width of a linear defect such as a crack occurring on the wall or the road surface to investigate the degree of pressure to rebuild or repair, for example, a tunnel and a road. In such investigation, for example, a plurality of cameras that are provided for a vehicle are used to capture a plurality of images, and the obtained multiple images are combined (see Japanese Unexamined Patent Application Publication No. 2016-218555).

However, in the related art, when positional displacement or the like is present in the boundary portion of combined images, for example, a state such as a crack across the boundary tends to be recognized in error.

SUMMARY

Embodiments of the present disclosure described herein provide an information processing device, a method of displaying an image, and carrier means. The information processing device and the method include an operation acceptance unit configured to receiving a request to display combined-image data indicating an image in which a plurality of images captured upon dividing a spatially continuous region are combined, and outputting the combined-image data and boundary line information including position information of a boundary line indicating a combined portion of the plurality of images, in response to the request to display the display combined-image data. The carrier means caries computer readable code for controlling a computer to carry out the method.

According to one aspect of the present disclosure, an image that includes a boundary line indicative of the combined portion of multiple pictures can easily be analyzed.

BRIEF DESCRIPTION OF THE DRAWINGS

A more complete appreciation of embodiments and the many attendant advantages thereof will be readily obtained as the same becomes better understood by reference to the following detailed description when considered in connection with the accompanying drawings.

FIG. 1 is a schematic diagram of an image display system according to an embodiment of the present disclosure.

FIG. 2 is a diagram illustrating a combined image to be generated, according to an embodiment of the present disclosure.

FIG. 3 is a diagram illustrating a hardware configuration of an information processing device and a terminal device according to an embodiment of the present disclosure.

FIG. 4 is a diagram illustrating a functional configuration of an information processing device according to an embodiment of the present disclosure.

FIG. 5 is a diagram illustrating a functional configuration of a terminal device according to an embodiment of the present disclosure.

FIG. 6 is a flowchart of the processes to be performed by an information processing device, according to an embodiment of the present disclosure.

FIG. 7 is a diagram illustrating how a pair of captured images are combined or joined, according to an embodiment of the present disclosure.

FIG. 8 is a diagram illustrating the position of a boundary line, according to an embodiment of the present disclosure.

FIG. 9A and FIG. 9B are diagrams each illustrating a case where the combined position of a pair of captured images is displaced, according to an embodiment of the present disclosure.

FIG. 10 is a diagram illustrating the width of displacement in the combined position of a pair of captured images, according to an embodiment of the present disclosure.

FIG. 11 is a flowchart of the processes to be performed by a terminal device, according to an embodiment of the present disclosure.

FIG. 12 is a diagram illustrating the functions of an alternative information processing device, according to an embodiment of the present disclosure.

The accompanying drawings are intended to depict embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments illustrated in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more central processing units (CPUs), digital signal processors (DSPs), application-specific integrated circuits (ASICs), field-programmable gate arrays (FPGAs), computers or the like. These terms may be collectively referred to as processors.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Embodiments of the present disclosure are described below with reference to the accompanying drawings. Firstly, an information processing device and a method of processing information using the information processing device are described below.

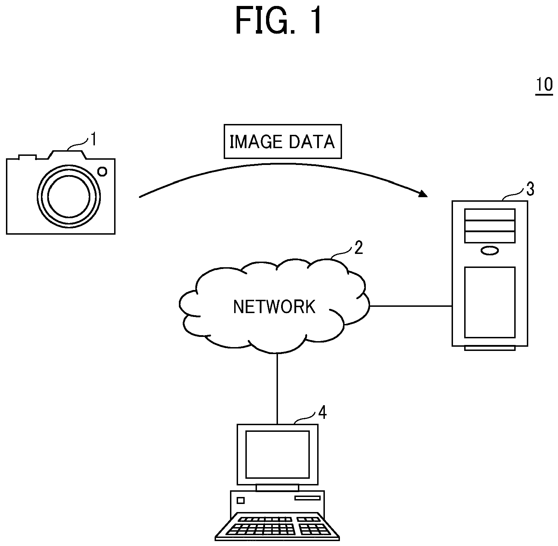

FIG. 1 is a schematic diagram of an image display system according to an embodiment of the present disclosure.

An image display system 10 according to the present embodiment includes a camera 1, an information processing device 3, and a terminal device 4. In the image display system 10, the information processing device 3 and the terminal device 4 are connected to each other through a network 2. The camera 1 may be connected to the information processing device 3 and the terminal device 4 through the network 2, or may be connected to the terminal device 4 using any desired communication method.

The camera 1 according to the present embodiment is mounted on, for example, a tunnel inspection car. Alternatively, the camera 1 according to the present embodiment is carried by an inspector to take a picture of an object. An object of image capturing to take a picture is, for example, a tunnel, a bridge, and a road formed of concrete, asphalt, or the like, and the wall or ground of a structure such as building. In order to detect an abnormality such as a crack on the surface of a subject, the above tunnel inspection car or inspector moves the camera 1 to take a plurality of pictures of a wide area. In the present embodiment, a plurality of cameras 1 for image capturing may be arranged with adjusted angles. By so doing, a plurality of pictures may be taken at the same time.

The image data of a plurality of taken pictures is sent to the information processing device 3 together with the position information with which, for example, the shooting time, the location of photo shooting, the camera location can be identified. The camera 1 may send the captured image data to the information processing device 3 through the network 2, or may send the captured image data to the information processing device 3 through the terminal device 4.

The information processing device 3 uses the received image data and position information to generate a combined image in which a plurality of images are combined, and stores the combined image together with the boundary line information that indicates the boundary of the combined image. The boundary line information according to the present embodiment includes the information about the position at which the image of the boundary line is superimposed and displayed on the combined image. In other words, the boundary line information includes position information of the boundary line to be superimposed and displayed on the combined image.

The terminal device 4 receives the image data and the boundary line information stored in the information processing device 3, and displays an image on which the boundary line is superimposed on the combined image. In the present embodiment, the terminal device 4 may be connected to the information processing device 3 through the network 2, or may directly be coupled to the information processing device 3.

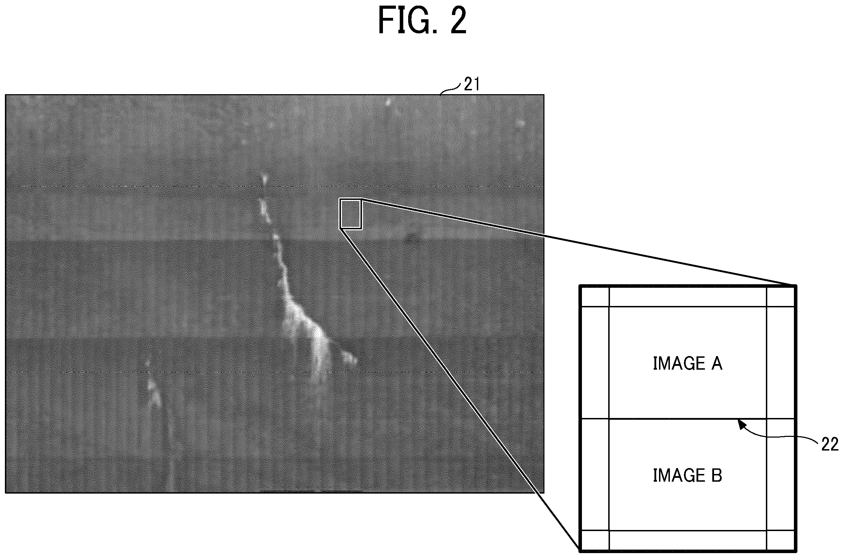

FIG. 2 is a diagram illustrating a combined image generated by the information processing device 3, according to the present embodiment.

The combined image 21 illustrated in FIG. 2 is an image in which a plurality of images whose capturing ranges are adjacent to each other are combined. The inspector can efficiently check the captured image over a wide range by referring to the combined image 21. In the example image illustrated in FIG. 2, the boundary line is not superimposed on the combined image. However, in the present embodiment, a boundary line that indicates the combined portion of a plurality of images is displayed on the combined image 21.

More specifically, for example, in FIG. 2, the boundary line 22 is displayed at the combined portion between an image A and an image B that are included in the combined image 21 and have capturing ranges adjacent to each other. The processes of superimposing and displaying the boundary line on the combined image are described below in detail.

Firstly, a hardware configuration of the information processing device 3 and the terminal device 4 according to the present embodiment is described.

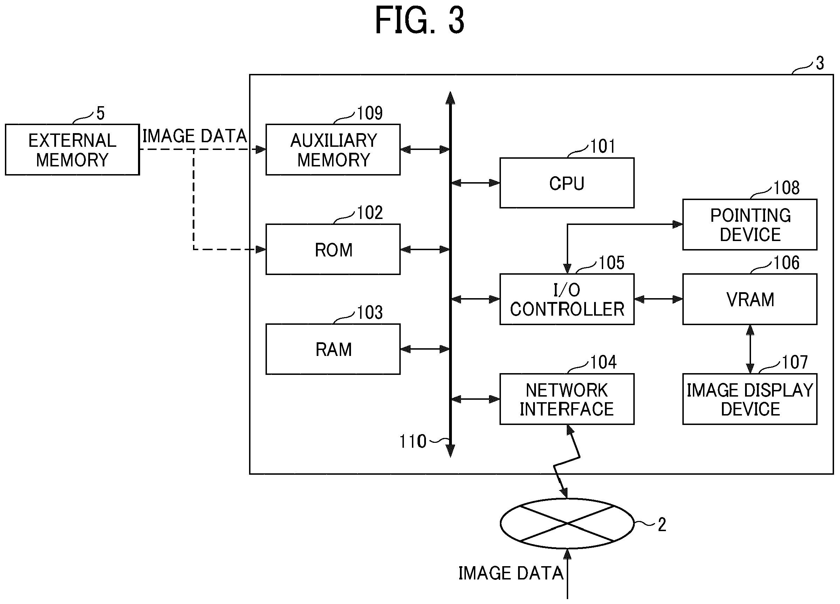

FIG. 3 is a diagram illustrating a hardware configuration of the information processing device 3 according to the present embodiment.

The information processing device 3 includes, for example, a central processing unit (CPU) 101, a read only memory (ROM) 102, a random access memory (RAM) 103, a network interface 104, an input and output (I/O) controller 105, and an auxiliary memory 109 that are connected to each other through a bus 110.

The CPU 101 reads from the ROM 102 or the auxiliary memory 109 a program for causing the information processing device 3 to execute the processes according to the present embodiment, and executes the program.

The RAM 103 is a working memory used by the CPU 101 to operate, and is also used to store image data on a temporary basis.

The network interface 104 is an interface that performs data communication using a communication network. The network interface 104 is also used for exchanging the image data.

The auxiliary memory 109 is an external storage unit provided for the information processing device 3, and may be, for example, a hard disk drive (HDD), a compact disc read-only memory (CD-ROM), and a universal serial bus (USB) memory.

The information processing device 3 further includes a video random access memory (VRAM) 106 coupled to the input and output controller 105, an image display device 107, and a pointing device 108.

The image display device 107 is controlled by the input and output controller 105, and includes a monitor screen such as a liquid crystal display or a cathode-ray tube (CRT) display. The image display device 107 displays an original image or digital photographic image and an image that is being processed by computation, and also displays, for example, the edges of a certain area to be superimposed on the image, and lines or arrows that indicate the directions or pixels.

The pointing device 108 according to the present embodiment is a means for indicating the position on an image displayed on the image display device 107. Such a position on the display may be, for example, the position indicated by a mouse, a mouse cursor of a keyboard, and a finger contacting a touch panel, which are controlled by the input and output controller 105.

The VRAM 106 is a means for storing an object to be displayed on the image display device 107 on a temporary basis, and is controlled by the input and output controller 105.

The terminal device 4 according to the present embodiment is an information processing device, and its hardware configuration is equivalent to that of the information processing device 3. Accordingly, the description of the hardware configuration of terminal device 4 is omitted. When the terminal device 4 is, for example, a tablet personal computer (PC) or a smartphone, the terminal device 4 may be provided with a touch panel instead of the pointing device 108 in addition to the above-described configuration. The terminal device 4 may include a camera and a global positioning system (GPS) receiver that receives a GPS signal from a GPS satellite. In such cases, the terminal device 4 receives a GPS signal to obtain the position information.

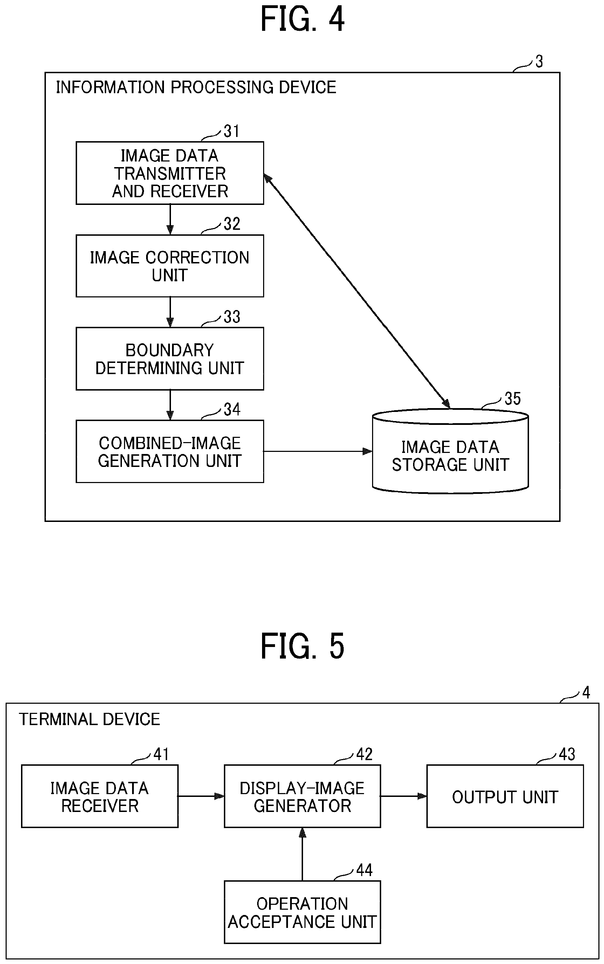

FIG. 4 is a diagram illustrating a functional configuration of the information processing device 3 according to the present embodiment.

The information processing device 3 includes an image data transmitter and receiver 31, an image correction unit 32, a boundary determining unit 33, a combined-image generation unit 34, and an image data storage unit 35. The above functional units other than the image-data storage unit 35 are implemented as the CPU 101 executes the instructions or commands that are included in one or more programs installed in the information processing device 3. The image data storage unit 35 is implemented by, for example, a storage unit such as the auxiliary memory 109.

The image data transmitter and receiver 31 has a function to exchange image data with, for example, the camera 1 and the terminal device 4.

The image correction unit 32 has a function to correct the received image data so as to combine a pair of images of the image data appropriately.

The boundary determining unit 33 has a function to determine the position of the boundary line when a pair of images of the image data are combined. In other words, the boundary determining unit 33 generates boundary line information that includes the position information of the boundary line.

The combined-image generation unit 34 has a function to generate a combined image in which a plurality of images are combined, based on a plurality of items of image data and the boundary line information.

The image data storage unit 35 has a function to store, for example, the image data and the boundary line information.

FIG. 5 is a diagram illustrating a functional configuration of the terminal device 4, according to the present embodiment.

The terminal device 4 includes an image data receiver 41, a display-image generator 42, an output unit 43, and an operation acceptance unit 44. The above functional units are implemented as the CPU of the terminal device 4 executes the commands or instructions that are included in one or more programs installed in the terminal device 4.

The image data receiver 41 requests combined-image data and the boundary line information that indicate a combined image from the information processing device 3, and sends the received combined-image data and boundary line information to the display-image generator 42.

The display-image generator 42 according to the present embodiment uses the received combined-image data and boundary line information to generate a combined image on which the boundary line has been superimposed, based on the operation or input made through the operation acceptance unit 44, which specifies, for example, the type of boundary line, showing or hiding the boundary line, and zooming in or out of the image, and sends the generated data of an image on which the boundary line has been superimposed to the output unit 43.

When the operation acceptance unit 44 receives an operation to hide the boundary line, the display-image generator 42 sends only the combined-image data to the output unit 43 without superimposing the boundary line on the combined image.

The output unit 43 according to the present embodiment displays the image data received from the display-image generator 42 on the image display device 107. The output unit 43 may separately output the combined-image data and the boundary line information.

The operation acceptance unit 44 according to the present embodiment receives an operation or input made through the manipulation of, for example, the pointing device 108. The operation acceptance unit 44 may receive an operation or input made through a keyboard, or may receive an operation or input made based on the recognition of input voice.

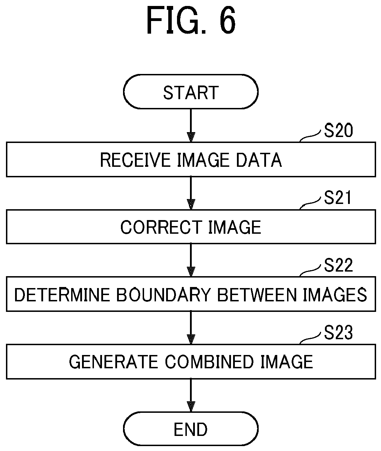

FIG. 6 is a flowchart of the processes performed by the information processing device 3, according to the present embodiment.

In a step S20, the image data transmitter and receiver 31 receives the image data of a plurality of photographs taken upon dividing a spatially continuous region. In other words, the image data transmitter and receiver 31 takes in image data. The image data may be received from the external memory 5 through the auxiliary memory 109, or may be received from, for example, the camera 1 connected to the network 2 through the network interface 104.

The image data transmitter and receiver 31 may store the received image data in the image data storage unit 35.

For example, the image data holds the brightness value indicating the brightness or luminosity of each pixel at 8 bits per pixel. Alternatively, in order to reduce the data size, the data may be compressed and held in a format based on a standard such as joint photographic experts group (JPEG). For example, the image data may include information about the time at which the images were captured and the location of the camera 1 as information used to combine a pair of images.

The image data transmitter and receiver 31 may sends the image data stored in the image data storage unit 35 in response to a request from, for example, the terminal device 4.

In a step S21, the image correction unit 32 corrects the image data received by the image data transmitter and receiver 31 so that the images will be combined appropriately. In the area around the boundary between a pair of captured images whose capturing ranges are adjacent to each other, even if the same region is captured in those images, there is a difference in conditions such as the distance from a camera and the angle of the camera. The correction processes according to the present embodiment are aimed at correcting such differences.

In a step S22, the boundary determining unit 33 determines the position of the boundary line when combining a pair of images in the image data corrected by the image correcting unit 32, and sends the corrected image data and the boundary line information including the position information of the determined boundary line to the combined image generating unit 34.

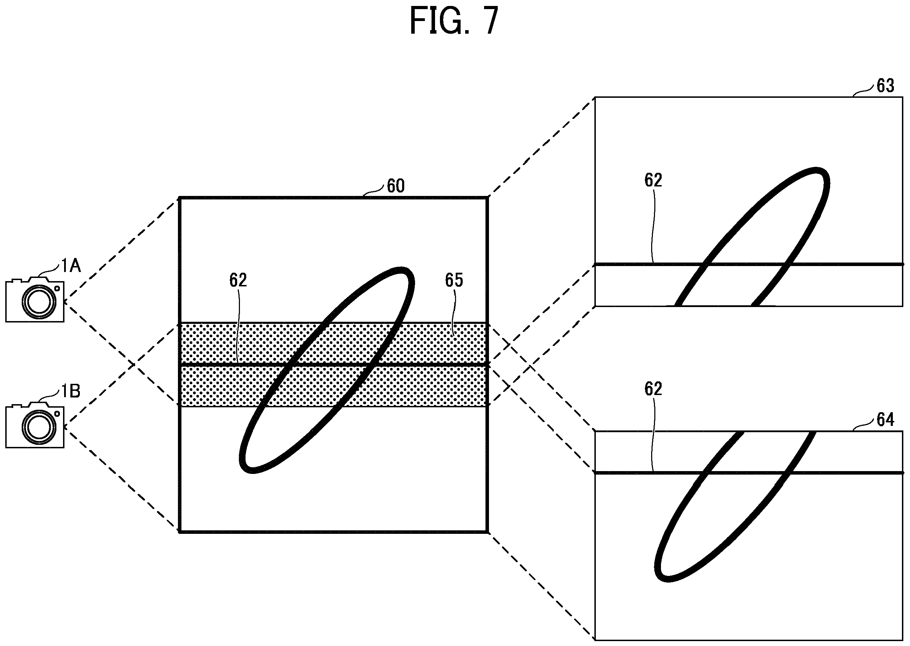

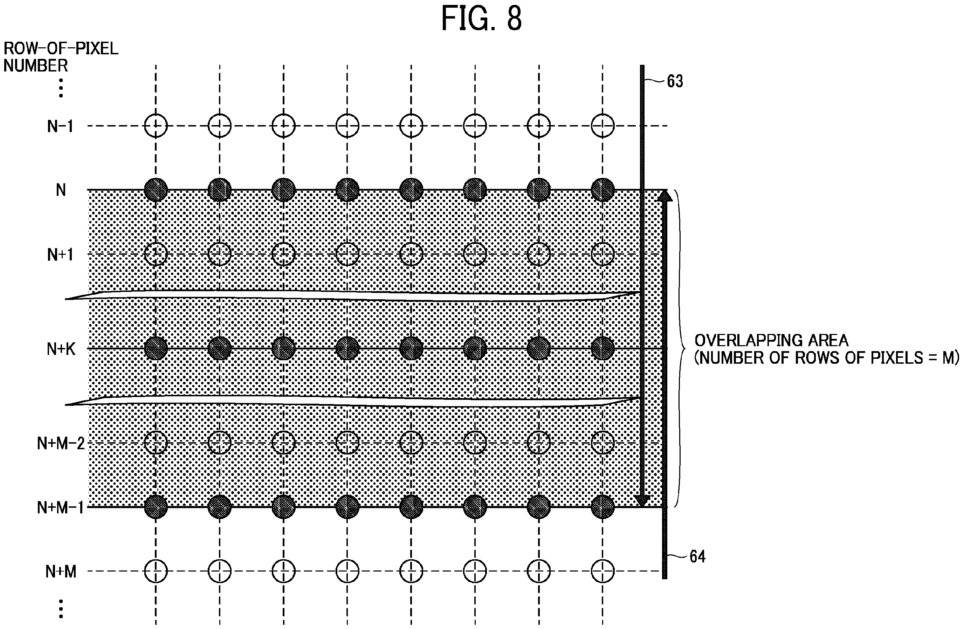

The processes of determining the position of the boundary line are described below in detail with reference to FIG. 7 and FIG. 8.

FIG. 7 is a diagram illustrating how a pair of captured images are combined or joined, according to the present embodiment.

In FIG. 7, when the image in a capturing range 60 is captured by a camera 1A and a camera 1B, the position of a boundary line 62 between the image 63 captured by the camera 1A and the image 64 imaged by the camera 1B is determined.

Firstly, the boundary determining unit 33 according to the present embodiment specifies an overlapping region 65 where a captured image A and a captured image B overlap each other, based on, for example, the information about the time at which the images were captured and the locations of the cameras, which are included in the received image data. The overlapping region 65 is indicated by a shaded portion in the capturing range 60. Subsequently, the boundary determining unit 33 determines the position of the boundary line 62 between the captured image 63 and the captured image 64 within the specified overlapping region 65.

FIG. 8 is a diagram illustrating the position of a boundary line according to the present embodiment, and an area around the overlapping region 65 is magnified for view and is displayed on a pixel-by-pixel basis.

As illustrated in FIG. 8, for example, the boundary determining unit 33 according to the present embodiment sequentially assigns row-of-pixel numbers to pixels from an upper portion of the image data in the horizontal direction. The first row-of-pixel number may be the uppermost row of pixel of the captured image 64, or may be the uppermost row of pixel of the entire combined image. Based on the row-of-pixel numbers, the position of the boundary line between the captured image 63 and the captured image 64 is specified. The position of the boundary line is satisfactory as long as it is within the overlapping region 65, and when it is assumed that L denotes the row-of-pixel number of the boundary line, the value of L is to be determined so as to satisfy an equation given below.

$$L = N + K$$

$$0 \leq K \leq M-1$$

In the above equation, L, N, and K denotes integers equal to or greater than 0, and M denotes a natural number. In the above equation and inequality, M denotes the number of rows of pixels in the overlapping region 65, and the row-of-pixel number N indicates the uppermost portion of the captured image B. Moreover, the row-of-pixel number N + M - 1 indicates the lowermost portion of the captured image A.

In a step S23, the combined-image generating unit 34 generates the combined-image data indicating the combined image based on the received image data and the boundary line information, and stores the generated combined-image data and boundary line information in the image data storage unit 35 in association with each other.

As illustrated in FIG. 7 or FIG. 8, the combined image of the captured image 63 and the captured image 64 is an image obtained by combining an image from the uppermost portion of the captured image 63 to the boundary line 62 with an image from a row of pixel below the boundary line 62 by one pixel to the lowermost portion of the captured image 64. Alternatively, the combined image of the captured image 63 and the captured image 64 may be an image obtained by combining an image from the uppermost portion of the captured image 63 to a row of pixel above the boundary line 62 by one pixel with an image from the boundary line 62 to the lowermost portion of the captured image 64. Alternatively, the captured image 63 and the captured image 64 may be handled separately as separate files.

Further, in the present embodiment, the information indicating whether the boundary line is to be displayed or hidden from view may be included in the information included in the boundary line information. Whether the boundary line is to be displayed or hidden from view is determined based on the displacement in the combined position of a pair of captured images. The reason why the above information is used to make determination and a method of making determination are described below.

Typically, it is very difficult to accurately combine adjacent images on a pixel-by-pixel basis at all positions. Accordingly, the combined position may deviate from an original position. Such a deviation may be referred to as displacement in the combined position of a pair of captured images. When the combined position of a pair of captured images is displaced, there is a possibility that an erroneous analysis may be made as if there are a plurality of cracks near the boundary line. Such an erroneous analysis is made when, for example, the state of cracks on the surface of the wall in the tunnel are inspected.

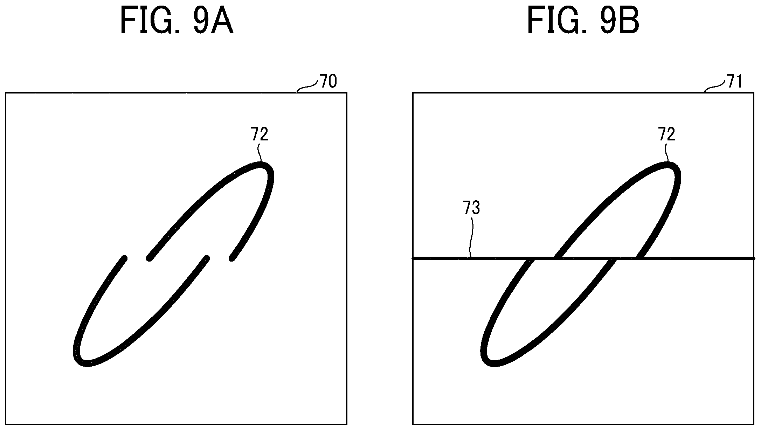

FIG. 9A and FIG. 9B are diagrams each illustrating displacement in the combined position of a pair of captured images according to the present embodiment, and illustrates a coupled image 70 of the captured image 63 when the boundary line 73 is to be hidden from view and not displayed and the captured image 64 and an image 71 on which the boundary line has been superimposed when the boundary line 73 is to be displayed.

As illustrated in FIG. 9A, when the boundary line 73 is hidden and not displayed, it is difficult to determine whether the object 72 is broken due to displacement in the combined position of a pair of captured images, and there is a possibility that the object 72 is erroneously recognized as if the object 72 is originally divided into two.

By contrast, as illustrated in FIG. 9B, when the boundary line 73 is displayed and superimposed on a pair of captured images as in the image 71, it is apparent that the broken portion of the object 72 matches the boundary line 73, and it is easy to determine that the combined position of a pair of captured images is displaced. On the other hand, when the combined position of a pair of captured images is not displaced, the object 72 is not cut or broken, and erroneous determination is not likely to be made. Accordingly, in such cases, it is not necessary to display the boundary line 73. Accordingly, it is effective to switch between displaying or hiding the boundary line 73 depending on whether the combined position of a pair of captured images is displaced.

A method of determining whether there is displacement in the combined position of a pair of captured images is described below.

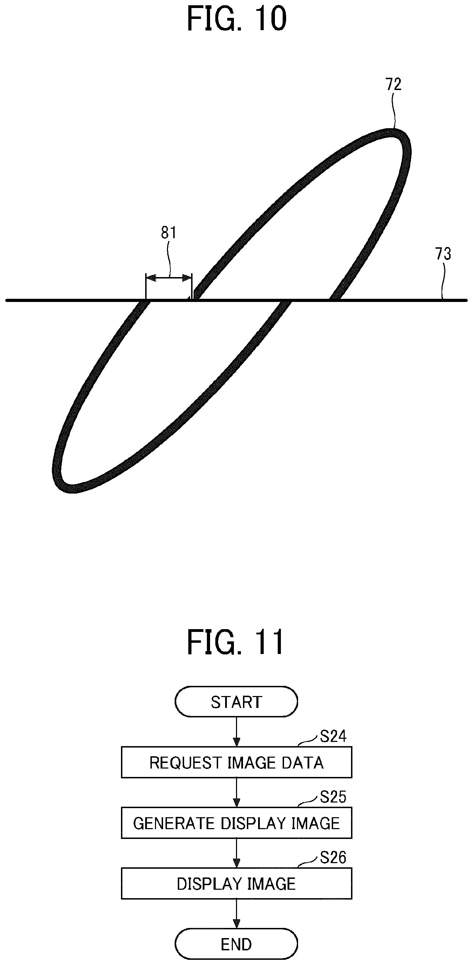

FIG. 10 is a diagram illustrating the width of displacement in the combined position of a pair of captured images, according to the present embodiment.

In FIG. 10, the boundary determining unit 33 according to the present embodiment regards the object 72 as a crack on the wall of the tunnel, and measures a positional-displacement width 81 illustrated in FIG. 10. Subsequently, the boundary determining unit 33 compares the positional-displacement width 81 with a predetermined distance d. The boundary determining unit 33 determines to display the boundary line 73 when the positional-displacement width 81 is longer than the predetermined distance d, and determines not to display the boundary line when the positional-displacement width 81 is equal to or shorter than the predetermined distance d.

In other words, when the positional-displacement width 81 is wider than the predetermined distance d, the boundary determining unit 33 according to the present embodiment makes the information indicating that the boundary line is to be displayed in the boundary line information. When the positional-displacement width 81 is shorter than the predetermined distance d, the boundary determining unit 33 according to the present embodiment makes the information indicating that the boundary line is to be hidden from view and not displayed in the boundary line information.

In the present embodiment, as an example of a method of measuring the positional-displacement width 81, for example, a linear object captured in a digital photograph may be detected and its line width may be measured. In the present embodiment, a methodology as above is adopted, and an area around the boundary line between the two images, i.e., the captured image 63 and the captured image 64, is analyzed. Then, the difference between the positions of the object 72 detected in both the captured image 63 and the captured image 64 is computed and obtained. As a result, the positional-displacement width 81 is computed and obtained.

In the present embodiment, the above-described processes in the steps S20 to S23 are performed by the information processing device 3. However, as illustrated in FIG. 2, when there are images adjacent to each other not only horizontally but also vertically, the processes described herein are performed on the captured images adjacent to each other in all directions. In other words, if attention is focused on a certain captured image, images adjacent to each other in up to eight directions including the up-and-down and right-and-left directions and the four slanting directions are combined.

FIG. 11 is a flowchart of the processes performed by the terminal device 4, according to the present embodiment.

Once the operation acceptance unit 44 receives an operation or input requesting to display the image of combined-image data, in a step S24, the image-data receiving unit 41 of the terminal device 4 requests the information processing device 3 for the combined image and the boundary line information, and obtains the received combined image and the boundary line information.

In a step S25, the display-image generator 42 according to the present embodiment generates the data of an image where the boundary line has been superimposed on the combined image, based on the combined image and the boundary line information that are received by the image-data receiving unit 41.

As an example of a method of superimposing a boundary line on a combined image, all the pixels of the boundary line may be set to have an even brightness value. For example, when the brightness value takes a value varying between 0 and 255, all the brightness values of the pixels of the boundary line are set to the same value such as 0 and 255. The difference in brightness value is a difference in brightness or density of the boundary line to be displayed. If the image display device 107 can display a color image, the display-image generator 42 according to the present embodiment may generate the data of a boundary-line superimposed image in which the boundary line is colored. Instead of setting all the brightness values of the pixels of the boundary line to the same value, the display-image generator 42 may change the brightness values of the pixels of the boundary line at even intervals to generate the data of a boundary-line superimposed image such that the boundary line appears like a dotted line or a broken line. The display-image generator 42 may change the brightness values of pixels adjacent to the pixels of the boundary line to the same value to generate the data of a boundary-line superimposed image in which the thickness of the boundary line is increased.

In order to improve the visibility of the boundary line, the display-image generator 42 may change the brightness or density of the line according to the brightness of the pixels near the boundary of combination. By so doing, the degree of contrast with the pixels near the boundary of combination can be maximized. More specifically, the display-image generator 42 performs adjustment such that the difference between the average value of the brightness near the boundary of combination and the brightness of the boundary line is maximized. In so doing, the range in which the average value is to be obtained may be a region having a certain extent such as a region having an appropriate width on both sides of the boundary line. For example, the display-image generator 42 sets the brightness value of the boundary line to 255 when the average brightness value near the boundary line is 100, and sets the brightness value of the boundary line to 0 when the average brightness value near the boundary line is 150.

The operation acceptance unit 44 according to the present embodiment accepts the brightness value, color, thickness, and type of the boundary line, as well as an input operation of settings such as switching between displaying and hiding of the boundary line and zooming in or out of the combined image, and sends the setting data to the display-image generator 42. The input operation may be accepted through the pointing device 108 such as a mouse and a touch panel or a keyboard, or may be accepted through a microphone that receives and recognizes a voice input. If some of the pixels of the boundary line are thinned out when the size of an image to be displayed is reduced, pixels near the boundary line may be displayed as the boundary line.

In a step S25, the output unit 43 according to the present embodiment receives the image generated by the display-image generator 42, and displays the received image on the image display device 107.

As described above, according to the present embodiment, an image can be displayed where the boundary line indicative of the combined portion of a plurality of pictures has been superimposed on the combined image, and the image that includes the boundary line indicative of the combined portion of those multiple pictures can easily be analyzed. According to the present embodiment, display and non-display of the boundary line on the combined image can be switched as desired.

In the present embodiment, the boundary line is hidden and not displayed when the width of displacement in the combined portion is smaller than a predetermined distance d. By so doing, the visibility for a user can be improved.

In the present embodiment, it is assumed that the display-image generator 42 that generates the data of a boundary-line superimposed image is provided for the terminal device 4. However, no limitation is indicated thereby. The functions that the terminal device 4 have may be provided for the information processing device 3.

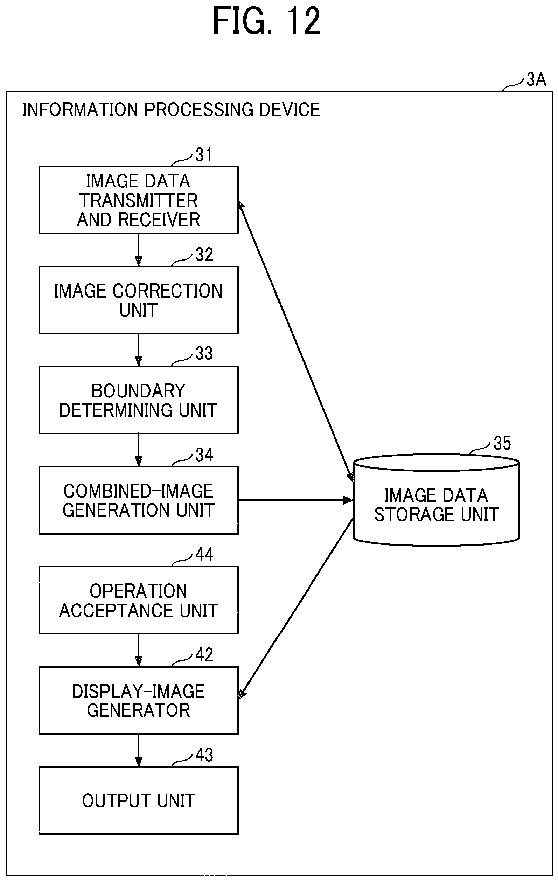

An information processing device 3A that includes the functions of the terminal device 4 is described below with reference to FIG. 12.

FIG. 12 is a diagram illustrating the functions of the alternative information processing device 3A, according to the present embodiment.

The information processing device 3A illustrated in FIG. 12 includes an image data transmitter and receiver 31, an image correction unit 32, a boundary determining unit 33, a combined-image generation unit 34, an image data storage unit 35, a display-image generator 42, an output unit 43, and an operation acceptance unit 44.

Once the operation acceptance unit 44 of the information processing device 3A illustrated in FIG. 12 receives a request to display a combined image from the terminal device 4, the display-image generator 42 of the information processing device 3A generates the data of an image on which the boundary line has been superimposed, based on the combined image and the boundary line information stored in the image storage unit 35. The information processing device 3A outputs and sends the generated data of an image on which the boundary line has been superimposed to the terminal device 4, and causes the terminal device 4 to display the data of an image on which the boundary line has been superimposed.

As described above, as the information processing device 3A is provided with a function to generate the combined-image data, the terminal device 4 only needs to display the data of an image on which the boundary line has been superimposed, and the configuration of the terminal device 4 can be simplified.

In the present embodiment, the camera 1 may be a general-purpose digital camera or may be an imaging device to be mounted on, for example, a vehicle. The imaging device that is to be attached to the vehicle may include, for example, a plurality of cameras arranged in a front-rear direction or up-and-down direction of the vehicle.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

The groups of devices or apparatuses that are described above as embodiments of the present disclosure are given as an example of a plurality of types of computing environment according to an embodiment of the present disclosure. In some alternative embodiments, an information processing system may include a plurality of computing devices such as server clusters. Such a plurality of computing devices may be configured to communicate with each other through any type of communication link such as a network and a shared memory and to implement the processes described as above as embodiments of the present disclosure.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions. The processing circuit herein includes, for example, devices such as a processor that is programmed to execute software to implement functions, like a processor with electronic circuits, an application specific integrated circuit (ASIC) that is designed to execute the above functions, a digital signal processor (DSP), a field-programmable gate array (FPGA), and a circuit module known in the art.

The information processing device 3 according to the present embodiment may be, for example, a projector (PJ), an electronic whiteboard that can perform communication, which may be referred to as an interactive white board (IWB), an output device such as digital signage, a heads-up display (HUD), an industrial machine, an imaging device, a sound recording device, a medical device, a networked household electrical appliance, a car including a connected car, a laptop personal computer (PC), a mobile phone, a smartphone, a tablet personal computer (PC), a game machine, a personal digital assistant (PDA), a digital camera, a wearable personal computer (PC), and a desktop personal computer (PC).

Note that numerous additional modifications and variations are possible in light of the above teachings. It is therefore to be understood that within the scope of the appended claims, the disclosure of the present disclosure may be practiced otherwise than as specifically described herein. For example, elements and/or features of different illustrative embodiments may be combined with each other and/or substituted for each other within the scope of this disclosure and appended claims.

Further, as described above, any one of the above-described and other methods of the present disclosure may be embodied in the form of a computer program stored on any kind of storage medium. Examples of storage media include, but are not limited to, flexible disks, hard disks, optical discs, magneto-optical discs, magnetic tape, nonvolatile memory cards, read only memory (ROM), etc. Alternatively, any one of the above-described and other methods of the present disclosure may be implemented by application-specific integrated circuits (ASICs), prepared by interconnecting an appropriate network of conventional component circuits, or by a combination thereof with one or more conventional general-purpose microprocessors and/or signal processors programmed accordingly.

The present disclosure can be implemented in any convenient form, for example using dedicated hardware, or a mixture of dedicated hardware and software. The present disclosure may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present disclosure can be implemented as software, each and every aspect of the present disclosure thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

**Claims**

1.  An information processing device (3) comprising:

    an operation acceptance unit (44) configured to accept a request to display combined-image data indicating a combined image (21) in which a plurality of images captured upon dividing a spatially continuous region are combined; and

    an output unit (43) configured to output the combined-image data and boundary line information including position information of a boundary line (22) indicating a combined portion of the plurality of images, in response to the request to display the combined-image data.

2.  The information processing device (3) according to claim 1, further comprising

    a display-image generator (42) configured to generate data of an image in which the boundary line (22) has been superimposed on the combined image (21), based on the combined-image data and the boundary line information, wherein the output unit (43) is configured to output the data of the image in which the boundary line (22) has been superimposed on the combined image (21).

3.  The information processing device (3) according to claim 2,
    wherein the display-image generator (42) is configured to change color of the boundary line (22) according to an operation accepted by the operation acceptance unit (44).

4.  The information processing device (3) according to claim 3,
    wherein the display-image generator (42) is configured to change a type of the boundary line (22) according to the operation accepted by the operation acceptance unit (44).

5.  The information processing device (3) according to claim 3 or 4,
    wherein the display-image generator (42) is configured to change thickness of the boundary line (22) according to the operation accepted by the operation acceptance unit (44).

6.  The information processing device (3) according to claim 5,
    wherein the display-image generator (42) is configured to maximize a difference in the combined image (21) between an average value of display brightness near the boundary line (22) and a value of brightness of the boundary line (22).

7.  The information processing device (3) according to any one of claims 3 to 6,
    wherein the display-image generator (42) is configured to switch the boundary line (22) between showing and hiding according to the operation accepted by the operation acceptance unit (44).

8.  The information processing device (3) according to any one of claim 3 to 7,

wherein the boundary line information includes information indicating whether or not to display the boundary line (22), and

wherein the information indicating whether or not to display the boundary line (22) is determined based on a width of positional displacement when the plurality of images are combined.

9. The information processing device (3) according to any one of claims 3 to 8,

wherein the operation acceptance unit (44) is configured to receive at least one of an input through a keyboard, a pointing device, or a touch panel as well as a voice input through a microphone.

10. A method of displaying an image, the method comprising:

receiving a request to display combined-image data indicating an image (21) in which a plurality of images captured upon dividing a spatially continuous region are combined; and

outputting the combined-image data and boundary line information including position information of a boundary line (22) indicating a combined portion of the plurality of images, in response to the request to display the display combined-image data.

11. A carrier means carrying computer readable code for controlling a computer to carry out the method of claim 10.

# FIG. 1

10

IMAGE DATA

1

3

2

NETWORK

4

# FIG. 2

IMAGE A

IMAGE B

EP 4 040 394 A1

# FIG. 3

EXTERNAL MEMORY — 5

IMAGE DATA

AUXILIARY MEMORY — 109

ROM — 102

RAM — 103

CPU — 101

POINTING DEVICE — 108

I/O CONTROLLER — 105

VRAM — 106

NETWORK INTERFACE — 104

IMAGE DISPLAY DEVICE — 107

110

3

2

IMAGE DATA

EP 4 040 394 A1

# FIG. 4

INFORMATION PROCESSING DEVICE ⟋3

IMAGE DATA TRANSMITTER AND RECEIVER ⟋31

IMAGE CORRECTION UNIT ⟋32

BOUNDARY DETERMINING UNIT ⟋33

COMBINED-IMAGE GENERATION UNIT ⟋34

IMAGE DATA STORAGE UNIT ⟋35

# FIG. 5

TERMINAL DEVICE ⟋4

IMAGE DATA RECEIVER ⟋41

DISPLAY-IMAGE GENERATOR ⟋42

OUTPUT UNIT ⟋43

OPERATION ACCEPTANCE UNIT ⟋44

# FIG. 6

START

RECEIVE IMAGE DATA — S20

CORRECT IMAGE — S21

DETERMINE BOUNDARY BETWEEN IMAGES — S22

GENERATE COMBINED IMAGE — S23

END

# FIG. 7

EP 4 040 394 A1

# FIG. 8

ROW-OF-PIXEL NUMBER

⋮

N−1

N

N+1

N+K

N+M−2

N+M−1

N+M

⋮

63

64

OVERLAPPING AREA
(NUMBER OF ROWS OF PIXELS = M)

EP 4 040 394 A1

FIG. 9A

FIG. 9B

EP 4 040 394 A1

# FIG. 10

# FIG. 11

START

REQUEST IMAGE DATA ⟋S24

GENERATE DISPLAY IMAGE ⟋S25

DISPLAY IMAGE ⟋S26

END

# FIG. 12

**3A**

INFORMATION PROCESSING DEVICE

**31**
IMAGE DATA TRANSMITTER AND RECEIVER

**32**
IMAGE CORRECTION UNIT

**33**
BOUNDARY DETERMINING UNIT

**34**
COMBINED-IMAGE GENERATION UNIT

**35**
IMAGE DATA STORAGE UNIT

**44**
OPERATION ACCEPTANCE UNIT

**42**
DISPLAY-IMAGE GENERATOR

**43**
OUTPUT UNIT

Europäisches
Patentamt

European
Patent Office

Office européen
des brevets

# EUROPEAN SEARCH REPORT

Application Number

EP 21 21 4862

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 712 782 A1 (RICOH CO LTD [JP]) 23 September 2020 (2020-09-23) | 1-7,9-11 | INV. G06T11/20 G06T3/40 |
| A | * abstract, Figs. 1-55, [0001-0334], claims 1-10 * | 8 | |
| X,D | JP 2016 218555 A (MITSUBISHI ELECTRIC CORP) 22 December 2016 (2016-12-22) | 1-7,9-11 | |
| A | * abstract, Figs. 1-13, claims 1-10, [0001-0068] * | 8 | |

TECHNICAL FIELDS
SEARCHED      (IPC)

G06T

The present search report has been drawn up for all claims

| Place of search | Date of completion of the search | Examiner |
|---|---|---|
| Munich | 8 June 2022 | Borotschnig, Hermann |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P04C01)

EP 4 040 394 A1

## ANNEX TO THE EUROPEAN SEARCH REPORT
## ON EUROPEAN PATENT APPLICATION NO.

EP 21 21 4862

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2022

| Patent document cited in search report | | Publication date | Patent family member(s) | | Publication date |
|---|---|---|---|---|---|
| EP 3712782 | A1 | 23-09-2020 | EP | 3712782 A1 | 23-09-2020 |
| | | | JP | 2020153873 A | 24-09-2020 |
| JP 2016218555 | A | 22-12-2016 | JP | 6456239 B2 | 23-01-2019 |
| | | | JP | 2016218555 A | 22-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016218555 A